# EUROPEAN PATENT SPECIFICATION

(11) **EP 3 325 870 B1**
(45) Date of publication and mention of the grant of the patent: **12.02.2020**
(21) Application number: 16828527.8
(22) Date of filing: 21.07.2016
(51) Int. Cl.: F16L 55/04, F15B 1/14, F16L 55/052, F16L 55/053, F15B 1/02, F15B 1/16

(54) **ABSORBER WITH A PLURALITY OF MULTI-LAYERED GAS-FILLED BLADDERS FOR ACCOMMODATING CHANGES IN FLUID CHARACTERISTICS WITHIN A FLUID DELIVERY SYSTEM**
ABSORBER MIT EINER VIELZAHL VON MEHRSCHICHTIGEN GASGEFÜLLTEN BLASEN ZUR AUFNAHME VON VERÄNDERUNGEN IN FLUIDEIGENSCHAFTEN INNERHALB EINES FLUIDAUSGABESYSTEMS
AMORTISSEUR AVEC UNE PLURALITÉ DE VESSIES REMPLIES DE GAZ MULTICOUCHES PERMETTANT DE S'ADAPTER À DES CHANGEMENTS DANS DES CARACTÉRISTIQUES DE FLUIDE À L'INTÉRIEUR D'UN SYSTÈME DE DÉLIVRANCE DE FLUIDE

(30) Priority: 22.07.2015 US 201514806205
(43) Date of publication of application: 30.05.2018
(73) Proprietor: AMTROL Licensing Inc., West Warwick, RI 02893 (US)
(72) Inventor: COGLIATI, Michael, Boonton, NJ 07005 (US); VAN HAAREN, Christopher, A., Warwick, RI 02818 (US)
(74) Representative: Hoefer & Partner Patentanwälte mbB
(86) International application number: PCT/US2016/043316
(87) International publication number: WO 2017/015448

(56) References cited:
- US-A- 2 497 020
- US-A- 2 638 932
- US-A- 3 621 882
- US-A- 4 020 872
- US-A- 4 209 041
- US-A- 4 714 093
- US-A- 5 117 873
- US-A- 5 409 041
- US-A- 5 709 248

## Description

### BACKGROUND OF THE INVENTION

### 1. Field of the Invention

The subject invention relates to an absorber for a fluid delivery system, and more particularly, to a multi-layered gas-filled bladder for accommodating changes in the fluid characteristics that exist within a fluid delivery system, including, for example, absorbing volume expansion due to water heating within the fluid delivery system, suppressing or arresting pressure surges associated with a shock wave or water hammer propagating through the water delivery system, or accommodating volume expansion within a reverse osmosis water filtration system to provide a storage volume of fluid.

### 2. Description of the Related Art

Incompressible fluids (such as water) produce volumetric affects under certain conditions. For instance, when heated, water expands in volume. Within a fixed contained system, this heated expansion of water will increase the pressure within the system. Another volume affect is that shock waves occur in fluid systems when a flow in the supply is quickly and abruptly closed or when a force in flow is suddenly changed. The fluid system is usually liquid system, but sometimes also is a gas system. Such shock waves commonly occur when valve is closed at an end of a piping system, resulting in a pressure wave propagating in the pipe, which is commonly referred to as a water hammer.

The change in pressure within a fluid delivery system, by thermal expansion or by closure of the supply or sudden change in momentum of the flow can cause substantial problems. For example, a buildup of water flow can be created, resulting in a pressure spike that can physically rattle the pipes, causing noise and vibration. This noise and vibration can often be heard and felt within a dwelling or building. The water hammer also produces stress on the pipes and components in the piping system, which can lead to failure in the system and water damage.

While the presence of the water hammer phenomena cannot always he anticipated when planning plumbing layouts, it can be corrected. In particular, in order to prevent violent pipe noise, system failure and damage, devices have been developed to provide an alternate path for dissipating or otherwise absorbing high pressure spikes in a fluid delivery system.

For example, shock suppressors have been developed to reduce the pressure spike in a fluid delivery system. Such shock suppressors, also referred to as water hammer arrestors, utilize a pre-charge of air to provide an air cell or air cushion that absorbs the pressure shock in the system.. One example of such a device includes an air chamber in the form of a vertical pipe located in a wall of piping at a point located near a faucet or valve.

The air chamber acts as a cushion to prevent impact between the water and the piping. As the pressure shock enters the shock suppressor, the air cushion compresses, the air pressure increases and the shock is absorbed. These shock suppressors can be incorporated into a system component such as a valve or the like, and generally include a movable piston that is sealed to the inner diameter of the pipe. The air charge on one side of the piston provides resistance to water pressure on the other side of the piston until the water pressure increases above the air charge pressure. When this occurs, the expanded water pushes the piston and enters the pipe.

Shock absorbers have also been developed which include a flexible diaphragm separating the air cushion from the water stream that enters the shock absorber. It can be positioned at an appropriate location within a piping system so that when water flow is abruptly stopped or changed within the system, the water can enter the shock absorber. As the water enters the shock absorber, it comes into contact with the diaphragm which is pushed towards the air cushion on a side opposite the water side, compressing the air cushion. The contact with the diaphragm and compression of the air cushion acts to absorb the pressure shock.

US 3 621 882 A shows a pressure compensator and accumulator which comprises a casing having ports at opposite ends and a hermetically sealed air chamber means of elastomeric material which is loosely housed within the casing.

US5 409 041 A shows an accumulator including a shell divided into a gas chamber and a fluid inflow chamber by a bladder made of a cold-resistant and gas-barrier laminated sheet which includes a polyvinyl alcohol type resin film containing a polyol type plasticizer in an amount of 15% to 50% by weight, a rubber sheet layer laminated at least one side of the polyvinyl alcohol type resin film and a film disposed therebetween of a non-vapor- and non-plasticizer-permeable resin film.

While such shock suppressors are capable of reducing water hammer and addressing the problems resulting therefrom, they are susceptible to losing their ability to absorb pressure shock and volume expansion over time. In particular, the diaphragm often weakens and fails, for example, at an outer edge or at an inside portion along the diaphragm. This failure reduces and often eliminates the ability of the shock suppressor to absorb water and pressure shock.

Furthermore, if the diaphragm fails and allows water to pass into the air cushion side, the water will come into contact with what is generally an unprotected metal housing, leading to corrosion and rust in the system. Consequently, regular maintenance of this type of shock absorber is required, often resulting in the need to replace the entire system. In addition, in this type of shock suppressors, a pre-charge of air is required to provide the air cushion. This complicates the design and application and maintenance of the shock absorber.

The present invention also provides an improved volume expansion absorber that absorbs a volume of water from a system. For example, when water in a system is heated, it expands, which results in an increased volume of water in the system that must be accommodated. The absorber readily accommodates this increased volume of water. The present invention also provides an absorber that accommodates volumetric expansion within a reverse osmosis water filtration system to provide a storage volume of fluid for subsequent delivery to a faucet or tap for consumption.

### SUMMARY OF THE INVENTION

The subject invention is directed to an absorber for use in a fluid delivery system according to the technical features of claim 1.

In an embodiment of the invention, the housing is connected to the fluid delivery system in such a manner so that the gas-filled bladder accommodates changes in fluid pressure within the fluid delivery system. In another embodiment of the invention the housing is connected to the fluid delivery system in such a manner so that the at least one gas-filled bladder accommodates changes in fluid volume within the fluid delivery system. In yet another embodiment of the invention, the housing is connected to the fluid delivery system in such a manner so that the gas-filled bladder accommodates changes in fluid volume within a reverse osmosis filtration system to provide a storage volume of fluid.

In an preferred embodiment of the subject invention, the absorber is configured as a shock suppressor or water hammer arrestor, and it includes a housing defining an interior chamber, a connective fitting extending radially outwardly from the housing in fluid communication with the interior chamber, and at least one air-filled bladder disposed within the interior chamber of the housing.

The air-filled bladder or cell has a predetermined pre-charge of air pressure of about between 137895 to 206843 Pa (20 to 30 psi) to absorb a pressure wave propagating in the fluid delivery system and/or to accommodate volumetric expansion within the fluid delivery system caused by heating or well pump activity. Due to the pre-charged air bladder, the absorber of the subject invention is essentially maintenance free.

According to the invention, the bladder or air ceil has a multi-layered polymeric shell that includes a plurality of successive relatively thin polymeric shell, layers to inhibit the formation of leak paths through the shell in the event that a single shell layer fails. Preferably, the housing and the bladder both have a generally spherical configuration, although the housing and bladder can have other geometric configurations, such as, for example, ovoid configurations. Furthermore, the housing preferably includes two hemispherical sections that are assembled by spin welding. The outer diameter of the bladder is preferably slightly smaller than the inner diameter of the housing so that the bladder is free to move around within the interior chamber of the housing.

Preferably, adjacent polymeric shell layers of the bladder are formed from dissimilar polymeric materials. It is envisioned that multi-layered polymeric shell can include successive polymeric layers formed from the group consisting of ethylene vinyl alcohol (EVOH), polyester, polyether, polyurethane, polyether urethane, polyester urethane, ethylene vinylacetate/ polyethylene copolymer, polyester elastomer (Hytrel), ethylenevinylacetate/polypropylene copolymer; polyethylene, polypropylene, neoprene, natural rubber, dacron/polyester, polyvinylchloride, thermoplastic rubbers, nitrile rubber, butyl rubber, sulfide rubber, polyvinyl acetate, methyl rubber, buna N, buna S, polystyrene ethylene propylene, polybutadiene, polypropylene and silicone rubber.

It is also envisioned that the multi-layered polymeric shell could include as many as seventy-two successive polymeric layers. However, the outer most polymeric layer in the multi-layered polymeric shell is preferably formed from a material other than ethylene vinyl alcohol EVOH due to its hygroscopic properties. The bladder preferably has an overall shell thickness of about approximately 0,000889 meter (0.035") after it has been formed from a multi-layered sheet of polymeric material. In this regard, the multi-layered material from which the shell is formed preferably has an initial thickness of about between 0.065" and 0.075" thick sheet.

It is envisioned that the absorber of the subject invention could include plural air bladders or cells, wherein one or more of the air bladders have differing constructions. The plural gas-filled bladders provide redundancy for continuing operation in the event that one or more of the plural bladders fails.

These and other features of the absorber of the subject invention will become more readily apparent to those having ordinary skill in the art from the following enabling description of the preferred embodiments of the subject invention taken in conjunction with the several drawings described below.

### BRIEF DESCRIPTION OF THE DRAWINGS

So that those skilled in the art to which the subject invention appertains will readily understand how to make and use the absorber of the subject invention without undue experimentation, preferred embodiments thereof will be described in detail herein below with reference to certain figures, wherein:
Fig. 1 is an illustration of a fluid delivery system in which absorbers constructed in accordance with a preferred embodiment of the subject invention are installed to accommodate changes in the fluid characteristics within the system, including pressure surges and volumetric expansion;
Fig. 2 is an exploded perspective view of the absorber of the subject invention, with parts separated for ease of illustration;
Fig. 3 is a cross-section view of the wall of the multi-layered polymeric shell of the air bladder or cell that forms part of the absorber of the subject invention; and
Fig. 4 is an illustration of a fluid delivery system that includes a reverse osmosis water filtration sub-system having an absorber constructed in accordance with the subject invention positioned to absorb fluid volume expansion to provide a storage volume of water.

### DETAILED DESCRIPTION OF THE PREFERRED EMBODIMENTS

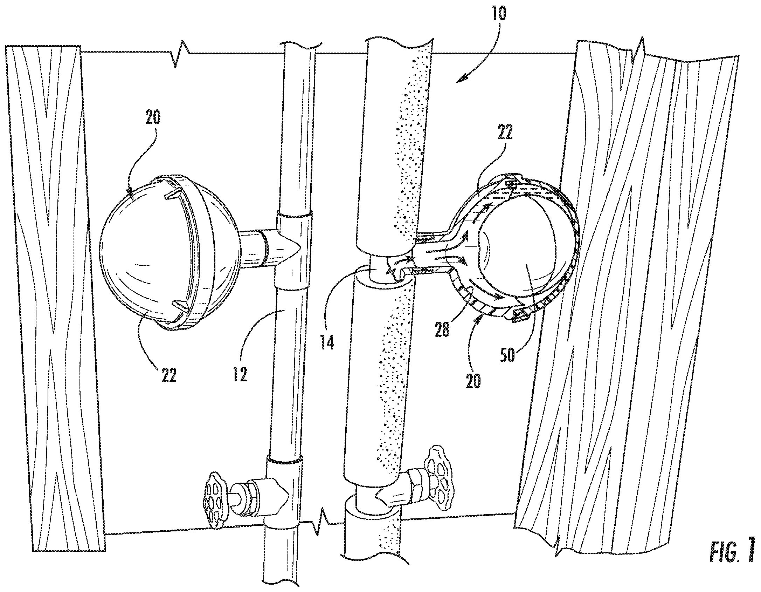

Referring now to the drawings wherein like reference numeral identify similar structure elements or features of the subject invention, there is illustrated in Fig. 1 a fluid delivery system 10 consisting of a network of pipes located within a residential home for delivering hot and cold water throughout the home. As illustrated, a pressure/volume absorber 20 constructed in accordance with a preferred embodiment of the subject invention is associated with both a cold water delivery pipe 12 and a hot water delivery pipe 14 to accommodate changes in fluid characteristic with the fluid delivery system 10.

In use, the pressure/volume absorbers 20 accommodate pressure changes and volume expansion within the pipes 12, 14 of the fluid delivery system 10. For example, the absorber 20 can accommodate pressure changes under a variety of circumstances, in order to reduce or otherwise prevent vibration in the pipes that can generate noise and potentially damage the system over time, leading to failure and water damage to the dwelling. Pressure changes can arise when water faucets or valves connected to the fluid delivery system are closed, causing a rapid pressure build-up in the pipes of the system. The absorber 20 can also accommodate volumetric expansion which can occur when water in the fluid delivery system 10 is heated or when water pressure is increased from well pump activity.

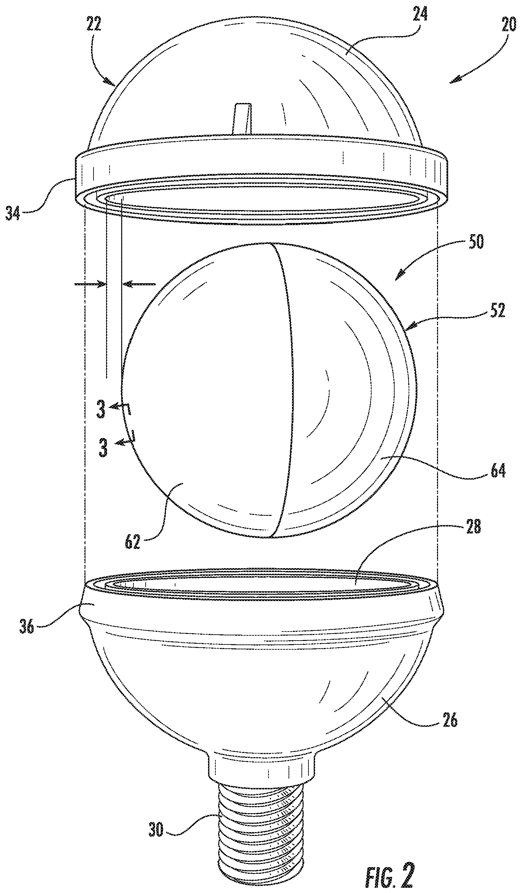

Referring now to Figs. 1 and 2, the absorber 20 includes a generally spherical housing 22 formed from two generally semi-spherical and substantially rigid upper and lower housing portions 24 and 26. The upper and lower housing portions 24 and 26 have respective circumferential flanges 34 and 36. As illustrated, the circumferential flange 34 of the upper housing portion 24 is dimensioned and configured to slightly overlap the circumferential flange 36 of the lower housing portion 26, which aids in the ultimate fabrication of the housing 22. Those skilled in the art will appreciate that this can be reversed so that the upper flange is overlapped by the lower flange.

During fabrication, the upper and lower housing portions 24 and 26 of housing 22 are joined to one another along the respective upper and lower flanges 34 and 36 by a spin welding process or by a similar joining process know in the art. By way of non-limiting example, the assembled housing 22 has a height of about 0,1143 meter (4-1/2 inches) and an outer diameter of about 0,0889 meter (3 -1/2 inches). Those skilled in the art will readily appreciate that the overall dimensions of the housing will vary depending upon the system requirements or applications.

The housing 22 defines an interior chamber 28 having an inner diameter (I.D.). A connective fitting or threaded stem connection 30 extends radially outwardly from the lower semi-spherical housing portion 26. The connective fitting 30 is in fluid communication with the interior chamber 28 and is configured to connect the housing 22 to the fluid delivery system 10, as shown for example in Fig. 1. By way of non-limiting example, the connective fitting has a 0,0127 meter (1/2 inch) NPT connection size. Those skilled in the art will readily appreciate that the connective fitting 30 can he configured with internal threading as opposed to the external threaded that is shown in the figures. Furthermore, the connective fitting can he configured and adapted to connect with standard or specialized plumbing components depending upon system design requirements.

With continuing reference to Fig. 2, the pressure absorber 20 of the subject invention furtiier includes a generally spherical, gas-filed, preferably air-filled bladder or cell 50, which is disposed within the interior chamber 28 of the housing 22 to accommodate volumetric expansion and/or absorb a pressure wave propagating in the fluid delivery system 10.

Depending upon size, the bladder 50 will have a predetermined precharge of air pressure (or a similar inert gaseous substance such as nitrogen) of about between 137895 to 206843 Pa (20 to 30 psi). Moreover, a precharge of air pressure in the range of 137895 Pa (20 psi) may be used for a smaller sized bladder, while a precharge pressure closer to the range of 206843 Pa (30 psi) would be used for a larger sized bladder. This differential is not a matter of system pressure, but rather it is a matter of the pressure that causes a shock in a certain sized pipe or conduit in the fluid delivery system 10. It should be readily appreciated by those having ordinary skill in the art that the bladder or cell 50 has no means for adjusting the pre-charged pressure. Thus, the absorber 20 is essentially maintenance free. This in is contrast to prior ait pressure absorbers that are pressurized when installed through an air stern which defines a potential leak path.

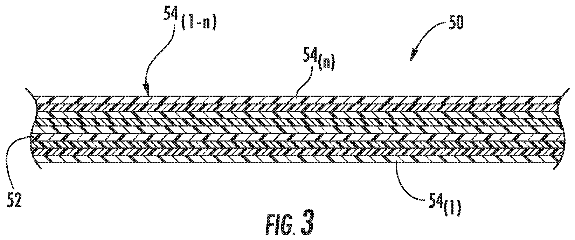

As best seen in Fig. 3, the bladder 50 has a multi-layered flexible polymeric shell 52 including a plurality of successive relatively thin polymeric shell layers 54(i_n) to inhibit the formation of leak paths through the shell 52 in the event that a single shell layer 54 fails. Adjacent shell layers 54 are formed from dissimilar materials so that it will be difficult for a leak path to propagate through the shell 52 from one layer to the next adjacent layer. The multi-layered polymeric shell 52 includes as many as seventy-two successive polymeric layers, thus layer 54

The polymeric layers 54(1-n) forming the shell 52 are selected from a group of polymeric materials that include ethylene vinyl alcohol (EVOH), polyester, polyether, poiyurethane, polyether urethane, polyester urethane, ethylenevinylacetate/polyethylene copolymer, polyester elastomer (Hytrel), ethylenevinylacetate/polypropylene copolymer; polyethylene, polypropylene, neoprene, natural rubber, dacron/poiyester, polyvinylchloride, thermoplastic rubbers, nitrile rubber, butyl rubber, sulfide rubber, polyvinyl acetate, methyl rubber, buna N, buna S, polystyrene ethylene propylene, polybutadiene, polypropylene and silicone rubber.

Because the outer-most layer 54(D of the shell 52 of bladder 50 is in contact with water, it is preferably formed from a material other than ethylene vinyl alcohol EVOH due to the hygroscopic properties of that material. Moreover, EVOH provides good permeation resistance, whereas polyester provides strength and abrasion resistance and polyether reduces water absorption for longevity. Poiyurethane provides flexibility and abrasion resistance.

By way of non-limiting example, a combination of selected materials may result in a bladder with performance in air temperatures from -40°C to 60°C (-40F to 140F), water temperature from -1,11111°C to 82,2222 °C (30F to 180F) and a minimum burst pressure of 6,205*10^6 Pa (900 psig).

The bladder or cell 50 is constructed from to substantially identical hemi- spherical sections 62 and 64 that are joined to one another along an equatorial seam in a spin welding process or by a similar joining technique known in the art. Accordingly, the material selection must be such that the bladder 50 has relatively good heat stake weldability on the seam to maintain shape and strength.

In a preferred embodiment of the subject invention, the bladder or cell 50 has an overall shell thickness of about approximately 0,000889 meter (0.035") after forming and joining the two hemi-spherical shell portions. The multi-layered sheet of material from which the shell 52 is formed has an initial thickness of about between 0,001651 meter (0.065) and 0,001905 meter (0.075 inches), in general, when it is formed, the spherical bladder 50 has an outer diameter (O.D.) that is slightly less than an inner diameter (I.D.) of the interior of the housing 22.

The bladder or cell 50 is configured so that it flexes to absorb volume expansion and/or pressure, as shown for example in the hot water side of Fig. 1. The multi-layered material from which the bladder 50 is constructed provides resistance because the interior of the bladder 50 maintains a reference pressure to the shock pressure on the exterior. Therefore, the increase in external pressure by the shock, forces the multi-layered material to flex inward into the reference pressure of the hollows sphere, thereby absorbing the system shock pressure.

It is envisioned that a plurality of bladders or cells 50 can be disposed within the housing 22 of the absorber 20. In other embodiments, the plural bladders can be provided with differing shapes, sizes, materials, and/or pressure/water absorption capabilities.

Such embodiments are beneficial if larger water volume expansions are anticipated, because the plural bladders can compress towards each other, resulting in a first absorption capacity, and each individual bladder can further absorb an amount of pressure and/or water volume resulting in a second absorption capacity.

Furthermore, in the event that one of the bladders fails, the device can continue to function to a degree because the remainder of the bladders can still function to absorb pressure and/or water volume. The plurality of bladders prevents a catastrophic "dead" tank because the redundancy allows continuing function, although reduced, to maintain operation in the system. This provides the benefit of improved product reliability. When an air cell or bladder fails with a tank of only bladder, the product ceases to function. With multiple air cells or bladders, when one cell fails, the product continues to function to a degree to extend the life of the product. With proper maintenance, the degraded function can signal a replacement of the product before a serious failure of any components of the system.

The bladder or cell 50 is configured such that the resistance matches and absorbs the water pressure that comes into contact therewith. The bladder 50 is further formed to have a wall thickness that, together with the material used in forming the bladder, provides the properties that are needed to provide control and absorption of pressure shocks and or water volume expansion as needed.

The bladder 50 is configured to deform as it absorbs pressure and/or a volume of water and then return to its original shape when it is not under pressure and/or is not absorbing the increased volume of water. The bladder 50 can also be configured such that it does not return to its original shape when it is not exposed to pressure and/or an increased volume of water. In either case, the bladder 50 is fabricated such that it is provided with a resistance, in its original shape or in its deformed shape that allows it to absorb subsequent pressure fluctuations and/or water volume fluctuations in the system repeatedly.

The bladder 50 can be fabricated so as to have more or less flexibility depending on its desired use. For example, a bladder 50 having greater flexibility will enable a greater amount of water volume absorption capability, because it will be more capable of flexure. On the other hand, a bladder 50 having a greater rigidity will provide a lesser amount of water volume absorption capability, because it will be less capable of flexure. The number of layers included in the shell of the balder and/or the materials that are used and the relative arrangement thereof can be selected to achieve a desired flexibility.

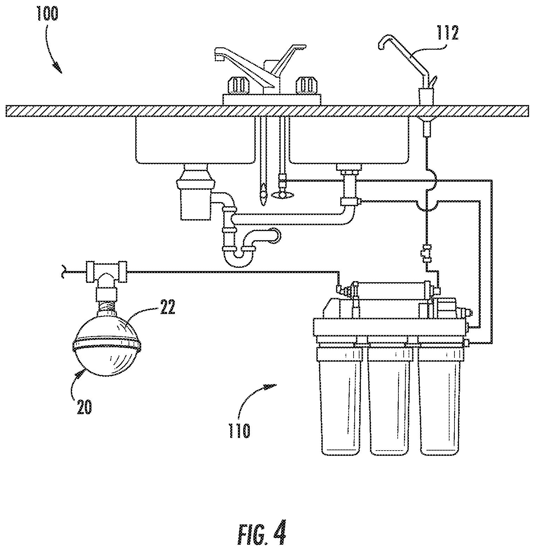

Referring now to Fig. 4, mere is illustrated a fluid delivery system 100 located within a residential kitchen. The fluid delivery system, 100 includes a reverse osmosis water filtration sub-system 110 that communicates with a counter-top tap 1 12 and an absorber 20 constructed in accordance with the subject invention. In water delivery system 100, the housing 22 of absorber 20 is connected in such a manner so that the air-filled bladder 50 located therein accommodates changes in fluid volume within the reverse osmosis sub-system 110 to provide a storage volume of water for ready delivery to the tap 112 upon demand. In such a configuration, the housing 22 of absorber 20 has an outer diameter of about 0,2032 meter (8 inches) or more in order to provide a storage volume of filtered water of at least 1 gallon or more, in this configuration, the air-filled bladder 50 has a pre-charge of about between 34473,8 to 275790 Pa (5 to 40 psi) depending upon the application and /or system requirements.

While the subject invention has been shown and described with reference to a number of preferred embodiments, those skilled in the art will readily appreciate that various changes and/or modifications may be made thereto without departing from the invention as defined by the appended claims.

## Claims

1. An absorber for use in a fluid delivery system (10), comprising:
a) a housing (22) defining an interior chamber (28);
b) a connector (30) extending from the housing in fluid communication with the interior chamber for connecting the housing (22) to the fluid delivery system (10);
**characterized by**
c) a plurality of gas-filled bladders (50) disposed within the interior chamber (28) of the housing (22) to accommodate changes in fluid characteristics within the fluid delivery system (10),
each gas-filled bladder (50) having a multi-layered flexible polymeric shell (52) including a plurality of successive relatively thin polymeric shell layers (54) to inhibit the formation of leak paths through the shell in the event that a single shell layer fails, wherein the plurality of gas-filled bladders (50) have differing constructions and provide redundancy for continuing operation in the event that one or more of the plurality of gas-filled bladders (50) fails.

2. An absorber as recited in Claim 1, wherein the housing (22) is connected to the fluid delivery system (10) in such a manner so that the plurality of gas-filled bladders (50) accommodates changes in fluid pressure within the fluid delivery system (10).

3. An absorber as recited in Claim 1, wherein the housing (22) is connected to the fluid delivery system (10) in such a manner so that the plurality of gas-filled bladders (50) accommodates changes in fluid volume within the fluid delivery system (10).

4. An absorber as recited in Claim 1, wherein the housing (22) is connected to the fluid delivery system (10) in such a manner so that the plurality of gas-filled bladders (50) accommodates changes in fluid volume within a reverse osmosis filtration system (110) to provide a storage volume of fluid.

5. An absorber as recited in Claim 1, wherein the housing (22) has a generally spherical configuration with an inner diameter that is greater than an outer diameter of each gas-filled bladder (50).

6. An absorber as recited in Claim 1, wherein the connector (30) extending from the housing (22) is a threaded fitting.

7. An absorber as recited in Claim 1, wherein each gas-filled bladder (50) has a predetermined pre-charge pressure of between about 5 psi to about 40 psi.

8. An absorber as recited in Claim 1, wherein each gas-filled bladder (50) is pre-charged with air or nitrogen.

9. An absorber as recited in Claim 1, wherein adjacent shell layers (54) are formed from dissimilar materials.

10. An absorber as recited in Claim 1, wherein the multi-layered polymeric shell includes successive polymeric layers formed from the group consisting of ethylene vinyl alcohol (EVOH), polyester, polyether, polyurethane, polyether urethane, polyester urethane, ethylenevinylacetate/polyethylene copolymer, polyester elastomer (Hytrel), ethylenevinylacetate/polypropylene copolymer; polyethylene, polypropylene, neoprene, natural rubber, dacron/polyester, polyvinylchloride, thermoplastic rubbers, nitrile rubber, butyl rubber, sulfide rubber, polyvinyl acetate, methyl rubber, buna N, buna S, polystyrene ethylene propylene, polybutadiene, polypropylene and silicone rubber.

11. An absorber as recited in Claim 1, wherein the multi-layered polymeric shell includes as many as seventy-two successive polymeric layer.

12. An absorber as recited in Claim 1, wherein the outer most polymeric layer in the multi-layered polymeric shell is a formed from a material other than ethylene vinyl alcohol EVOH due to its hygroscopic properties.

13. An absorber as recited in Claim 1, wherein each gas-filled bladder (50) has an overall shell thickness of about approximately 0,000889 meter after forming.

14. An absorber as recited in Claim 1, wherein the multi-layered material from which the shell is formed has an initial thickness of about between 0,001651 meter and 0,001905 meter thick sheet.

15. An absorber as recited in Claim 1, wherein the differing construction of each gas-filled bladder (50) comprises at least one of differing shape, size, material, or pressure or water absorption capability.

## Patentansprüche

1. Absorber zur Verwendung in einem Fluidzuführsystem (10), umfassend:
a) ein Gehäuse (22), das eine innere Kammer (28) bildet;
b) einen Verbinder (30), der sich vom Gehäuse in Fluidverbindung mit der Innenkammer erstreckt, um das Gehäuse (22) mit dem Fluidzuführsystem (10) zu verbinden;
**gekennzeichnet durch**
c) eine Mehrzahl von gasgefüllten Blasen (50), die in der Innenkammer (28) des Gehäuses (22) angeordnet sind, um Änderungen der Fluideigenschaften im Fluidzuführsystem (10) aufzunehmen,
wobei jede gasgefüllte Blase (50) eine mehrschichtige flexible Polymerschale (52) aufweist, die eine Mehrzahl von aufeinanderfolgenden, relativ dünnen Polymerschalenschichten (54) umfasst, um die Bildung von Leckpfaden durch die Schale in dem Fall zu verhindern, bei dem eine einzelne Schalenschicht ausfällt, wobei die Mehrzahl von gasgefüllten Blasen (50) unterschiedliche Konstruktionen aufweist und eine Redundanz für einen fortgesetzten Betrieb in dem Fall vorsieht, bei dem eine oder mehrere der Mehrzahl von gasgefüllten Blasen (50) ausfallen.

2. Absorber nach Anspruch 1, wobei das Gehäuse (22) mit dem Fluidzuführsystem (10) derart verbunden ist, so dass die Mehrzahl von gasgefüllten Blasen (50) Änderungen des Fluiddrucks im Fluidzuführsystem (10) aufnimmt.

3. Absorber nach Anspruch 1, wobei das Gehäuse (22) mit dem Fluidzuführsystem (10) derart verbunden ist, so dass die Mehrzahl von gasgefüllten Blasen (50) Änderungen des Fluidvolumens im Fluidzuführsystem (10) aufnimmt.

4. Absorber nach Anspruch 1, wobei das Gehäuse (22) mit dem Fluidzuführsystem (10) derart verbunden ist, so dass die Mehrzahl von gasgefüllten Blasen (50) Änderungen des Fluidvolumens innerhalb eines Umkehrosmose-Filtrationssystems (110) aufnimmt, um ein Speichervolumen eines Fluids vorzusehen.

5. Absorber nach Anspruch 1, wobei das Gehäuse (22) eine im Wesentlichen kugelförmige Konfiguration mit einem Innendurchmesser aufweist, der größer als ein Außendurchmesser jeder gasgefüllten Blase (50) ist.

6. Absorber nach Anspruch 1, wobei der Verbinder (30), der sich vom Gehäuse (22) erstreckt, ein Gewindeanschluss ist.

7. Absorber nach Anspruch 1, wobei jede gasgefüllte Blase (50) einen vorbestimmten Vorladedruck zwischen ungefähr 5 psi bis ungefähr 40 psi aufweist.

8. Absorber nach Anspruch 1, wobei jede gasgefüllte Blase (50) mit Luft oder Stickstoff vorgeladen ist.

9. Absorber nach Anspruch 1, wobei benachbarte Schalenschichten (54) aus unterschiedlichen Materialien ausgebildet sind.

10. Absorber nach Anspruch 1, wobei die mehrschichtige polymere Hülle aufeinanderfolgende polymere Schichten umfasst, die aus der Gruppe ausgebildet werden, die aus Ethylenvinylalkohol (EVOH), Polyester, Polyether, Polyurethan, Polyetherurethan, Polyesterurethan, Ethylenvinylacetat/Polyethylen-Copolymer, Polyesterelastomer (Hytrel), Ethylenvinylacetat/Polypropylen-Copolymer; Polyethylen, Polypropylen, Neopren, Naturkautschuk, Dacron/Polyester, Polyvinylchlorid, thermoplastische Kautschuke, Nitrilkautschuk, Butylkautschuk, Sulfidkautschuk, Polyvinylacetat, Methylkautschuk, Buna N, Buna S, Polystyrol-Ethylen-Propylen, Polybutadien, Polypropylen und Silikonkautschuk besteht.

11. Absorber nach Anspruch 1, wobei die mehrschichtige Polymerschale bis zu zweiundsiebzig aufeinanderfolgende polymere Schichten umfasst.

12. Absorber nach Anspruch 1, wobei die äußerste Polymerschicht in der mehrschichtigen Polymerschale aufgrund ihrer hygroskopischen Eigenschaften aus einem anderen Material als Ethylenvinylalkohol EVOH ausgebildet ist.

13. Absorber nach Anspruch 1, wobei jede gasgefüllte Blase (50) nach dem Formen eine Gesamtschalendicke von ungefähr 0,000889 Meter aufweist.

14. Absorber nach Anspruch 1, wobei das mehrschichtige Material, aus dem die Schale ausgebildet wird, eine Anfangsdicke von ungefähr 0,001651 Meter bis 0,001905 Meter eines dicken Blechs aufweist.

15. Absorber nach Anspruch 1, wobei die unterschiedliche Konstruktion jeder gasgefüllten Blase (50) mindestens eine unterschiedliche Form, Größe, Material oder Druck- oder Wasserabsorptionsfähigkeit aufweist.

## Revendications

1. Absorbeur destiné à être utilisé dans un système de distribution de fluide (10), comprenant :
a) un boîtier (22) définissant une chambre intérieure (28) ;
b) un connecteur (30) s'étendant depuis le boîtier en communication fluidique avec la chambre intérieure pour relier le boîtier (22) au système de distribution de fluide (10) ;
**caractérisé par**
c) une pluralité de vessies remplies de gaz (50) disposées dans la chambre intérieure (28) du boîtier (22) pour s'adapter à des changements de caractéristiques de fluide dans le système de distribution de fluide (10),
chaque vessie remplie de gaz (50) ayant une enveloppe polymère souple multicouche (52) comportant une pluralité de couches d'enveloppe successives polymères relativement minces (54) pour empêcher la formation de trajets de fuite à travers l'enveloppe en cas de défaillance d'une seule couche d'enveloppe, dans lequel la pluralité de vessies remplies de gaz (50) ont des constructions différentes et fournissent une redondance pour poursuivre le fonctionnement en cas de défaillance d'une ou de plusieurs de la pluralité de vessies remplies de gaz (50).

2. Absorbeur selon la revendication 1, dans lequel le boîtier (22) est relié au système de distribution de fluide (10) de sorte que la pluralité de vessies remplies de gaz (50) s'adapte à des changements de pression de fluide dans le système de distribution de fluide (10).

3. Absorbeur selon la revendication 1, dans lequel le boîtier (22) est relié au système de distribution de fluide (10) de sorte que la pluralité de vessies remplies de gaz (50) s'adapte à des changements de volume de fluide dans le système de distribution de fluide (10).

4. Absorbeur selon la revendication 1, dans lequel le boîtier (22) est relié au système de distribution de fluide (10) de sorte que la pluralité de vessies remplies de gaz (50) s'adapte à des changements de volume de fluide dans un système de filtration par osmose inverse (110) pour fournir un volume de stockage de fluide.

5. Absorbeur selon la revendication 1, dans lequel le boîtier (22) a une configuration globalement sphérique avec un diamètre interne qui est supérieur à un diamètre externe de chaque vessie remplie de gaz (50).

6. Absorbeur selon la revendication 1, dans lequel le connecteur (30) s'étendant depuis le boîtier (22) est un raccord fileté.

7. Absorbeur selon la revendication 1, dans lequel chaque vessie remplie de gaz (50) a une pression de précharge prédéterminée comprise entre environ 5 psi et environ 40 psi.

8. Absorbeur selon la revendication 1, dans lequel chaque vessie remplie de gaz (50) est préchargée avec de l'air ou de l'azote.

9. Absorbeur selon la revendication 1, dans lequel les couches d'enveloppe adjacentes (54) sont formées à partir de matériaux dissemblables.

10. Absorbeur selon la revendication 1, dans lequel l'enveloppe polymère multicouche comporte des couches polymères successives formées à partir du groupe constitué de l'éthylène-alcool vinylique (EVOH), de polyester, de polyéther, de polyuréthane, de polyéther uréthane, de polyester uréthane, d'un copolymère d'éthylènevinylacétate/polyéthylène, d'un élastomère de polyester (Hytrel), d'un copolymère d'éthylènevinylacétate/polypropylène ; de polyéthylène, de polypropylène, de néoprène, de caoutchouc naturel, de dacron/polyester, de polychlorure de vinyle, de caoutchoucs thermoplastiques, de caoutchouc nitrile, de caoutchouc butyle, de caoutchouc sulfure, d'acétate de polyvinyle, de caoutchouc méthyle, de buna N, de buna S, de polystyrène éthylène propylène, de polybutadiène, de polypropylène et de caoutchouc de silicone.

11. Absorbeur selon la revendication 1, dans lequel l'enveloppe polymère multicouche comporte jusqu'à soixante-douze couches polymères successives.

12. Absorbeur selon la revendication 1, dans lequel la couche polymère la plus externe dans l'enveloppe polymère multicouche est formée d'un matériau autre que l'éthylène-alcool vinylique EVOH en raison de ses propriétés hygroscopiques.

13. Absorbeur selon la revendication 1, dans lequel chaque vessie remplie de gaz (50) a une épaisseur totale d'enveloppe d'environ 0,000889 mètre après la formation.

14. Absorbeur selon la revendication 1, dans lequel le matériau multicouche à partir duquel l'enveloppe est formée a une épaisseur initiale de feuille comprise entre environ 0,001651 mètre et 0,001905 mètre.

15. Absorbeur selon la revendication 1, dans lequel la construction différente de chaque vessie remplie de gaz (50) comprend au moins une forme, une taille, un matériau, une pression ou une capacité d'absorption d'eau différent(e).
